# EUROPÄISCHE PATENTSCHRIFT

(11) **EP 0 943 213 B1**
(45) Veröffentlichungstag und Bekanntmachung des Hinweises auf die Patenterteilung: **29.09.2004**
(21) Anmeldenummer: 97951162.3
(22) Anmeldetag: 10.11.1997
(51) Int. Cl.: H04Q 3/66

(54) **ROUTING-VERFAHREN**
ROUTING METHOD
PROCEDE D'ACHEMINEMENT

(30) Priorität: 04.12.1996 EP 96119489
(43) Veröffentlichungstag der Anmeldung: 22.09.1999
(73) Patentinhaber: SIEMENS AKTIENGESELLSCHAFT, 80333 München (DE)
(72) Erfinder: STADEMANN, Rainer, D-85658 Egmating (DE)
(86) Internationale Anmeldenummer: PCT/EP1997/006245
(87) Internationale Veröffentlichungsnummer: WO 1998/025419

(56) Entgegenhaltungen:
- WO-A-96/11551
- DE-A- 4 322 563
- DE-A- 4 428 349
- US-A- 5 086 460
- CHEMOUIL P ET AL: "PERFORMANCE ISSUES IN THE DESIGN OF DYNAMICALLY CONTROLLED CIRCUIT-SWITCHED NETWORKS" IEEE COMMUNICATIONS MAGAZINE, Bd. 28, Nr. 10, 1.Oktober 1990, Seiten 90-95, XP000165760
- CHEN M -H ET AL: "INTERNATIONAL NETWORK MANAGEMENT DATA EXCHANGE: BENEFIT ASSESSMENT BY SIMULATION" GLOBECOM '95. IEEE GLOBAL TELECOMMUNICATIONS CONFERENCE, SINGAPORE, NOV. 14 - 16, 1995, Bd. 1, 14.November 1995, INSTITUTE OF ELECTRICAL AND ELECTRONICS ENGINEERS, Seiten 127-131, XP000621469

## Beschreibung

Routing-Verfahren unterschiedlicher Ausgestaltung sind aus den folgenden Dokumenten bekannt:
DE 43 22 563 A (ALCATEL SEL AG) 12.Januar 1995
DE 44 28 349 A (SIEMENS AG) 15.Februar 1996

CHEMOUL P ET AL: 'PERFORMANCE ISSUES IN THE DESIGN OF DYNAMICALLY CONTROLLED CIRCUIT-SWITCHED NETWORKS' IEEE COMMUNICATIONS MAGAZINE, Bd.28, Nr.10, 1.Oktober 1990, Seiten 90-95, XP000165760

WO 96 11551 A (BRITISH TELECOMMUNIATIONS PLC) 18.April 1996

US A 5 086 460 (ASH ET AL) 4.Februar 1992

CHEN M -H ET AL: 'INTERNATIONAL NETWORK MANAGEMENT DATA EXCHANGE: BENEFIT ASSESSMENT BY SIMUALTION' GLOBECOM '95: IEEEE GLOBAL TELECOMMUNICATIONS CONFERENCE, SINGAPORE, NOV.14-16,1995,Bd.1, 14.November 1995, INSTITUTE OF ELECTRICAL AND ELECTRONICS ENGINEERS, Seiten 127-131, XP000621469

Findet eine Transit-Vermittlungsstelle bei einem Verbindungsaufbau keine freie Leitung (z.B. infolge eines besetzten Leitweges), so kann dies unter Mitwirkung einer entsprechenden Rückwärtssignalisierung der vorhergehenden Vermittlungsstelle mitgeteilt werden. Wird nun in der vorhergehenden Vermittlungsstelle erneut die ursprüngliche Verbindung über einen anderen Leitweg aufgebaut, so wird dieses Verfahren kurz als "Rerouting" oder "Crankback" bezeichnet.

Mit dem genannten Rerouting-Verfahren kann unter normalen Lastbedingungen die Wahrscheinlichkeit gesteigert werden, daß eine Verbindung durch das Netz erfolgreich aufgebaut wird. Unter Hochlastbedingungen führt das Rerouting-Verfahren jedoch zu höheren Netzblockierungen als bei Verbindungsaufbau ohne Rerouting-Verfahren. Gleichzeitig erzeugt das Rerouting unter Hochlast zusätzliche blinde Last, was zu einer weiteren Verschärfung der Lastsituation im Netz führt.

Bisher wird das genannte Problem derart gelöst, daß in den erwähnten Hochlastfällen durch den Operator manuell abgeschaltet wird.

Diese Verfahrensweise hat folgende Nachteile:
- eine Vielzahl von Verkehrsmeßdaten müßte erfaßt werden. Dies wäre ohne ein aufwendiges und teures Vekehrs-Management-Zentrum nicht praktikabel,
- manuelle Eingriffe sind fehleranfällig,
- das Rerouting müßte gezielt für die jeweils betroffenen Verkehrsbeziehungen abgeschaltet werden, was in großen Netzen wegen der großen Anzahl von Verkehrsbeziehungen manuell nicht praktikabel ist.

Der Erfindung liegt die Aufgabe zugrunde, die genannten Nachteile zu vermeiden.

Die genannte Aufgabe wird durch ein Verfahren gemäß Anspruch 1 bzw. ein Routing-System gemäß Anspruch 3 gelöst.

Im folgenden wird ein Ausführungsbeispiel der Erfindung anhand der Zeichnung näher erläutert.

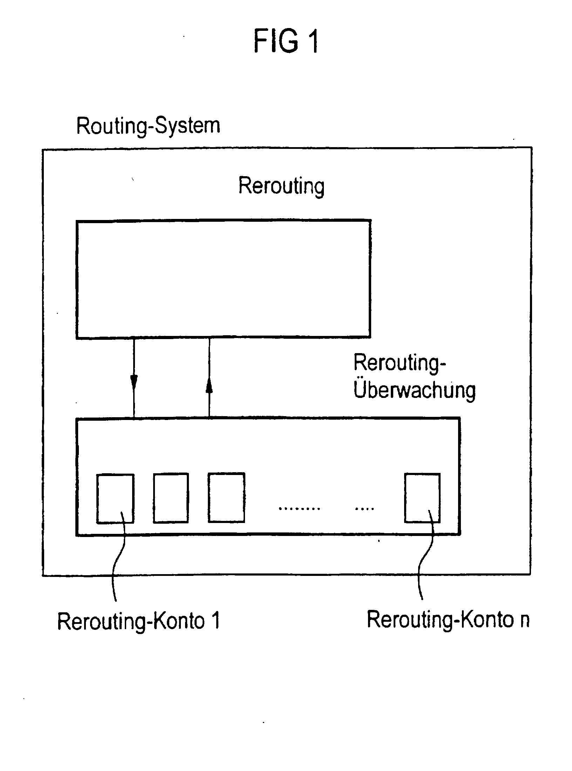

FIG 1 zeigt die Struktur des erfindungsgemäßen Routing-Systems. Das erfindungsgemäße System umfaßt eine Rerouting-Mittel sowie ein Rerouting-Überwachungsmittel. Das Rerouting-Überwachungsmittel führt pro Verkehrsbeziehung (Ursprungs-Ziel-Beziehung) ein Bewertungsspeichermittel, z.B. einen Eimer (Bucket) oder ein Konto (z.B. ein Zähler), mit dessen Hilfe bei jedem Call bewertet wird, ob das Rerouting aufrechterhalten bleibt oder abgeschaltet bzw. unterbunden wird.

Für jeden erfolgreich über einen Alternativweg gelenkten Call wird der Eimer (bzw. der Kontostand) um eine bestimmte Menge (bzw. bestimmten Betrag G) angefüllt (bzw. erhöht). Der genannte Eimer (bzw. das genannte Konto) weist eine obere Grenze für den Füllstand (bzw. den Kontostand) auf, die im folgenden als Maximalstand Cmax bezeichnet wird und unabhängig von der Verkehrsbeziehung ist.

Für jeden Call, für den ein Rerouting durchgeführt werden muß, wird der Eimer bzw das Konto andererseits um einen bestimmten Betrag S erniedrigt. Wenn der Eimer leer ist bzw. der Stand einen bestimmten Schwellwert unterschreitet, wird das Rerouting für den nächstfolgenden Ruf bzw. die nächstfolgenden Rufe derselben Verkehrsbeziehung unterdrückt.

Das Ereignis, das das Unterdrücken des Reroutings für eine Verkehrsbeziehung wieder beendet, kann z.B. der Ablauf einer bestimmten Zeitspanne sein. Das Beenden der Unterdrückung wird durch ein erneutes Auffüllen des zugehörigen Kontos (z.B. auf den Initialwert oder einen Wert, der gerade noch über dem Schwellwert liegt) erreicht.

Die folgenden Daten steuern das Drosseln des Reroutings:

### Semipermanente Daten des Anlagenprogrammsystems:

- Cmax:: Maximalstand des Eimers, z.B. Cmax = 40, patchable
- G:: Gewinn (Gain) für jeden erfolgreich gelenkten Call auf einem Alternativweg, z.B. G = 1, patchable
- S:: Verlust (Loss) für jeden gerouteten Call, z.B. S = 2, patchable

### Transiente Daten pro Verkehrsbeziehung:

nB: nicht negative Integerzahl, die den Inhalt des Eimers anzeigt, Initialisierung des Eimers: nB = 0,75 Cmax

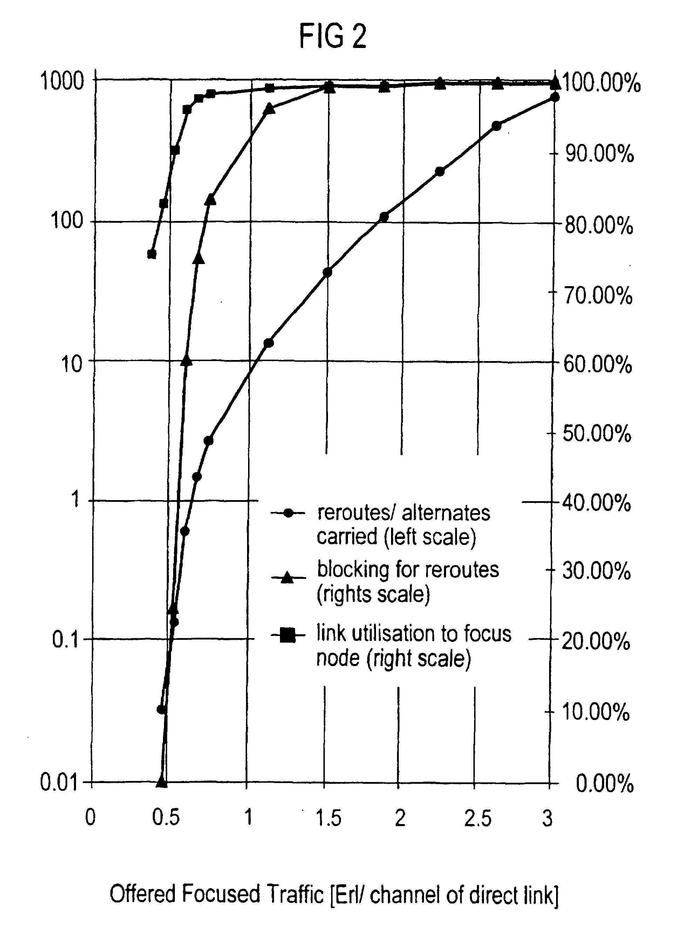

Die genannten Beispiel-Werte wurden auf der Basis einer Simulation gewählt, die sich auf die Untersuchung von Überlastsituationen konzentrierte und deren Ergebnisse mithilfe der FIG 2-6 dargestellt werden.

Bei dieser Simulation wurde ein beispielhaftes symmetrisches vollvermaschtes Netzwerk mit 23 Knoten und 120 Kanälen pro Link untersucht, und zwar unter folgenden Lastbedingungen: Zwei Wege Grundlast = 0,75 Erl/Kanal,
Konzentriertes Überlastangebot von Knoten 1 - 22 zum Knoten 23 (Ein Weg Überlast) von 0,375 Erl/Kanal bis zu 3 Erl/Kanal (im Beispiel wurde von der Anwendung eines dynamischen Routing-Verfahrens ausgegangen. Jedoch ist die Anwendung des erfindungsgemäßen Verfahrens auch bei nichtdynamischem Routing (z.B. "Fixed Alternate Routing") ohne Einschränkung möglich und sinnvoll).

FIG 2 zeigt das Ergebnis der genannten Simulation für den Quotienten aus der Zahl von Calls, für die ein Rerouting initiiert wurde und der Zahl der Calls, die erfolgreich über Alternativrouten gelenkt wurden in Abhängigkeit von der angebotenen Überlast (bei abgeschalteter Drosselung). Zusätzlich ist in FIG 2 die Link-Auslastung zum Zielknoten 23 und die Blockierwahrscheinlichkeit für Calls, bei denen Rerouting erfolgte, gezeigt.

Sobald die Links zum Zielknoten anfangen in Sättigung zu gehen (85%-95%), steigt demzufolge die Wahrscheinlichkeit dafür, daß ein Call, für den Rerouting erfolgte, blockiert wird steil an, d.h. das Rerouting wird sehr ineffizient. Parallel dazu steigt der genannte Quotient um zwei Größenordnungen an. Der genannte Quotient ist deshalb ein sehr empfindlicher Parameter zur Untersuchung der Wirkung des erfindungsgemäßen Rerouting-Drosselmechanismusses.

Sobald der genannte Quotient einen Wert von etwa 0,6 erreicht, steigt die Blockierwahrscheinlichkeit für einen erneut gerouteten Call auf mehr als 60% und die Link-Auslastung (Link Utilisation) auf 96%. In FIG 1 wurden als Parameter G = 1 und S = 2 gewählt.

Um zu überprüfen, daß durch das erfindungsgemäße Drosselungsverfahren auf der einen Seite die Routingperformance nicht beeinflußt wird und auf der anderen Seite die Netzwerklast reduziert wird, wurde das Überlastszenario nach FIG 2 mit dem erfindungsgemäßen Drosselungsmechanismus und ohne dem erfindungsgemäßen Drosselungsmechanismus simuliert.

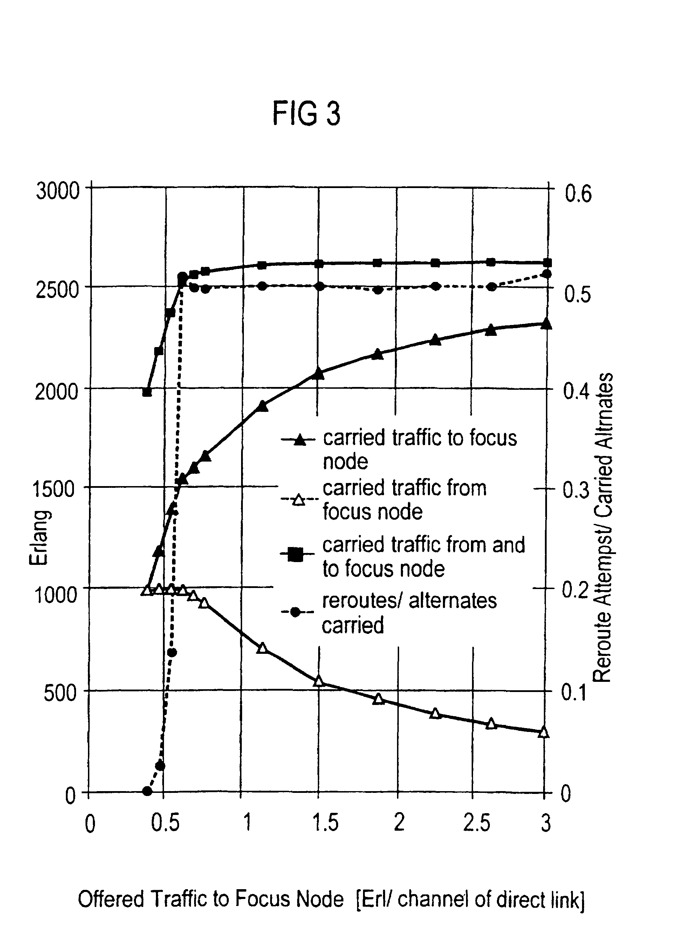

FIG 3 zeigt die Verkehrsbelastung (Carried Traffic) zu und von dem Zielknoten 23 für den Fall des Reroutings mit Drosselungsmechanismus. Aus FIG 3 ist ersichtlich, daß der Drosselungsvorgang aktiv wird, wenn die Kanalressourcen zum Zielknoten (22 x 120 = 2640 Kanäle) beinahe aufgebraucht sind, d.h. der Verkehr zum Zielknoten 23 praktisch ausnahmslos nur noch über Alternativwege (Ersatzwege) erfolgt. Nach diesem Punkt weicht der vermittelte Verkehr (Carried Traffic), der am Zielknoten terminiert, mehr und mehr vom vermittelten Verkehr, der im Zielknoten entspringt, ab.

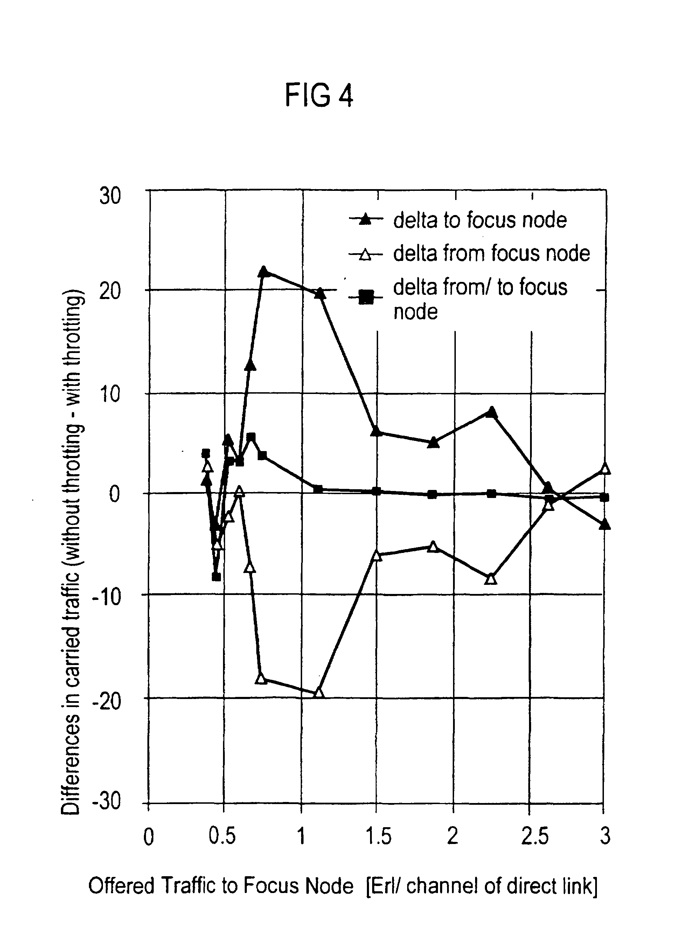

Da Unterschiede (Deltas) zu demjenigen Fall, in dem das Rerouting nicht gedrosselt wird, in FIG 3 aufgrund ihrer Größenordnungen nicht sichtbar sein würden, werden diese Deltas im Carried Traffic (Delta = nicht gedrosselt minus gedrosselt) in FIG 4 dargestellt.

FIG 4 zeigt also die genannten Deltas im Carried Traffic zum Zielknoten 23 zwischen dem ungedrosselten und gedrosselten Fall. Bevor das Drosseln Wirkung zeigt, sind die Unterschiede (Deltas) von rein statistischer Natur (verschiedene Zufallsstichproben (pattern) werden benützt). Wenn der angebotene Verkehr allerdings so hoch wird, daß das Drosseln des Rerouting aktiv wird, dann wird der Carried Traffic zu den Zielknoten um weniger als 1 Prozent reduziert. Diese Reduzierung wird zu einem großen Teil kompensiert durch einen Gewinn im Carried Traffic in die entgegen gesetzte Richtung. Insgesamt ist die Verringerung des übertragenen Verkehr von und zu dem Zielknoten durch das Drosseln der Rerouting Call Attempts somit vernachlässigbar (weniger als 0,2%).

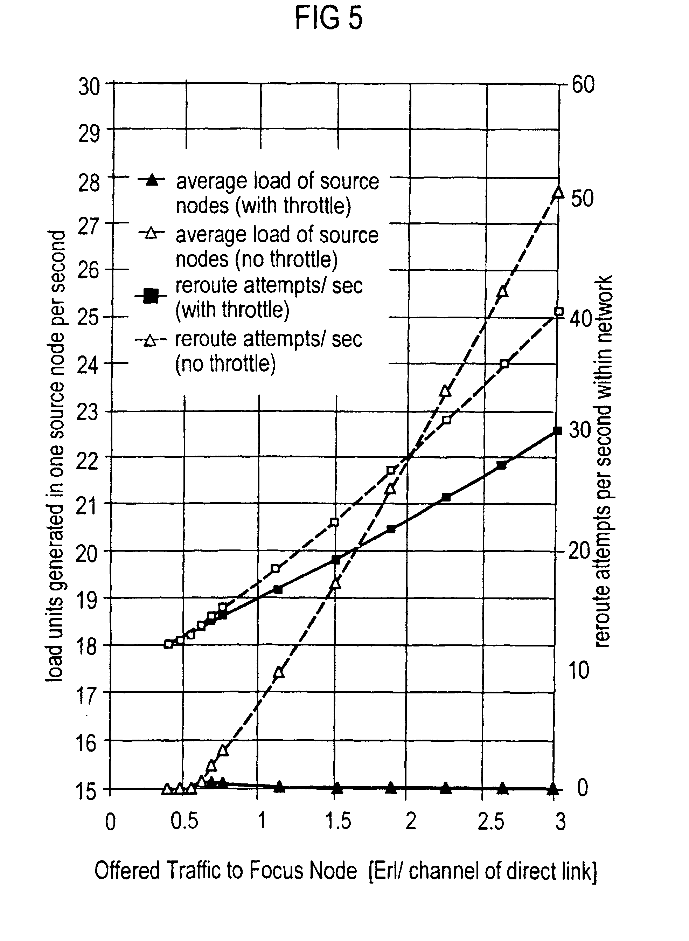

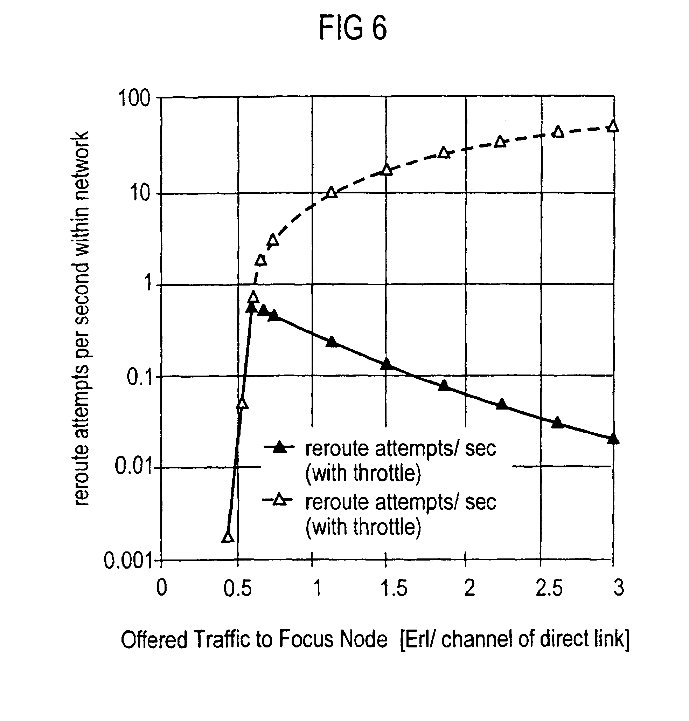

FIG 5 veranschaulicht, daß ohne das Drosseln die Rerouting-Versuche anfangen, das Netzwerk zu überfluten sobald die Trunk-Resourcen aufgebraucht sind. Diese Rerouting-Versuche tragen damit in erheblichem Maße zur insgesamt erzeugten Callprocessing-Last innerhalb der Netzwerkknoten bei. Da Rerouting-Versuche sich hauptsächlich zur Last der Transitknoten addieren, kann es sogar passieren, daß eine begrenzte Netzwerk-Degradation (Ausfall) zu einer netzwerkweiten Überlast führt. Wie aus FIG 5 und in einer logarithmischen Skalierung aus FIG 6 ersichtlich, ist das Drosseln extrem wirksam und führt in dem dargestellten Beispiel zu einer maximalen Rerouting-Versuchsrate von weniger als einem Rerouting-Versuch pro Sekunde innerhalb des Netzwerks.

Die maximale Rate wird dabei am sogenantnen Drossel-Schwellpunkt erreicht. Wenn der angebotene Verkehr darüberhinaus anwächst, wird die genannte Rate schnell reduziert, wogegen ohne das Drosseln die genannte Rate unbegrenzt mit dem angebotenen Verkehr anwächst.

Der verbleibende Zuwachs im Processing-Last (siehe FIG 5) wird durch das Call-Processing im Ursprungsknoten und im Transitknoten der ersten ausgesuchten alternativen Route verursacht. Dieser Zuwachs (Anstieg) könnte nur reduziert werden, wenn das alternative Routing selbst gedrosselt werden würde. Dieses Drosseln des alternativen Routings ist jedoch sehr problematisch, da dadurch selbst viel mehr die Routingperformance netagiv beeinflussende Effekte auftreten können, als durch das Drosseln des Reroutings.

Zusammengefaßt kann gesagt werden, daß die dargestellten Ergebnisse der Simulationen zeigen, daß der vorgestellte erfindungsgemäße Drosselmechanismus das Neztwerk effektiv gegen Überlastsituationen schützt ohne die Routingperformance negativ zu beeinflußen.

## Patentansprüche

1. Routing-Verfahren, demgemäß
a) von einem Ursprungsknoten für einen Call bei einem erfolglosen Routing-Versuch über einen nach dem Direktweg bzw. Planweg zuerst angebotenen Alternativweg ein Rerouting durchgeführt wird, wobei dem Call ein weiterer Alternativweg zu dem Zielknoten angeboten wird,
b) pro Verkehrsbeziehung zwischen Ursprungs/-Zielknoten-Paar jeweils ein Konto geführt wird, wobei
b1) bei einem erfolgreichen Routing eines Calls über einen zuerst angebotenen Alternativweg der Stand des der Verkehrsbeziehung dieses Calls zugeordneten Kontos um einen ersten Betrag erhöht wird,
b2) bei einem für einen Call erforderlichen Rerouting der Stand des der Verkehrsbeziehung dieses Calls zugeordneten Kontos um einen zweiten Betrag erniedrigt wird,
c) das Rerouting für eine bestimmte Verkehrsbeziehung gedrosselt wird, wenn der Stand des zu dieser Verkehrsbeziehung gehörigen Kontos einen bestimmten Schwellwert unterschreitet.

2. Routing-Verfahren nach Anspruch 1,
**dadurch gekennzeichnet, daß**
das Rerouting gedrosselt wird, indem es zeitweise unterbunden wird.

3. Routing-System eines Vermittlungsknotens in einem Kommunikationsnetz, mit
a) einem Rerouting-Mittel, das einem Call bei einem erfolglosen Routing-Versuch über einen nach dem Direktweg bzw. Planweg zuerst angebotenen Alternativweg einen weiteren Alternativweg anbietet,
b) einem Rerouting-Überwachungs-Mittel, welches derart ausgestaltet ist, dasses
b1) pro Verkehrsbeziehung zwischen Ursprungs/-Zielknoten-Paar jeweils ein Konto führt, wobei es
b11) bei einem erfolgreichen Routing eines Calls über einen zuerst angebotenen Alternativweg den Stand des der Verkehrsbeziehung dieses Calls zugeordneten Kontos um einen ersten Betrag erhöht,
b12) bei einem für einen Call erforderlichen Rerouting den Stand des der Verkehrsbeziehung dieses Calls zugeordneten Kontos um einen zweiten Betrag erniedrigt,
b2) das Rerouting für eine bestimmte Verkehrsbeziehung drosselt, wenn der Stand des zu dieser Verkehrsbeziehung gehörigen Kontos einen bestimmten Schwellwert unterschreitet.

4. Routing-System nach Anspruch 3,
**dadurch gekennzeichnet, daß**
das Rerouting-Uberwachungs-Mittel das Rerouting drosselt, indem es das Rerouting zeitweise unterbindet.

## Claims

1. A routing method in which
a) in the event of an unsuccessful routing attempt via an alternative path which is first offered after the direct path or planned path, a rerouting is executed for a call from a source node, wherein a further alternative path to the focus node is offered to the call,
b) an account is maintained in each case for each traffic relation between source/focus node pair, wherein
b1) the status of the account which is assigned to the traffic relation of this call is increased by a first amount when a call is successfully routed via a first offered alternative path,
b2) the status of the account which is assigned to the traffic relation of this call is decreased by a second amount when a rerouting is required for a call,
c) the rerouting for a specified traffic relation is throttled if the status of the account which is associated with this traffic relation falls below a specified threshold value.

2. The routing method according to Claim 1,
**characterised in that**
the rerouting is throttled by stopping it from time to time.

3. A routing system of a switching node in a communication network, including
a) a rerouting means which, in the event of an unsuccessful routing attempt via an alternative path which is first offered after the direct path or planned path, offers a call a further alternative path,
b) a rerouting monitoring means which is developed in such a way that it
b1) maintains an account in each case for each traffic relation between source/focus node pair, wherein it
b11) increases the status of the account which is assigned to the traffic relation of this call by a first amount when a call is successfully routed via a first offered alternative path,
b12) decreases the status of the account which is assigned to the traffic relation of this call by a second amount when a rerouting is required for a call,
b2) throttles the rerouting for a specified traffic relation if the status of the account which is associated with this traffic relation falls below a specified threshold value.

4. The routing system according to Claim 3,
**characterised in that**
the rerouting monitoring means throttles the rerouting by stopping the rerouting from time to time.

## Revendications

1. Procédé d'acheminement, suivant lequel
a) on effectue à partir d'un noeud de départ pour un appel en cas de tentative d'acheminement infructueuse un réacheminement via un chemin alternatif proposé en premier après le chemin direct ou le chemin planifié, tout en proposant à l'appel un autre chemin alternatif vers le noeud de destination,
b) on tient un compte pour chaque relation de trafic entre la paire noeud de départ/noeud de destination,
b1) en cas d'acheminement fructueux d'un appel via un chemin alternatif proposé en premier, l'état du compte affecté à la relation de trafic de cet appel étant augmenté d'une première valeur,
b2) en cas de réacheminement nécessaire pour un appel, l'état du compte affecté à la relation de trafic de cet appel étant diminué d'une seconde valeur,
c) on restreint le réacheminement pour une certaine relation de trafic lorsque l'état du compte associé à cette relation de trafic est en dessous d'une valeur seuil définie.

2. Procédé d'acheminement selon la revendication 1,
**caractérisé en ce qu'**
on restreint le réacheminement en l'interrompant par moments.

3. Système d'acheminement d'un noeud de commutation dans un réseau de communication, comprenant
a) un moyen de réacheminement offrant à un appel, en cas de tentative d'acheminement infructueuse via un chemin alternatif proposé en premier après le chemin direct ou le chemin planifié, un autre chemin alternatif,
b) un moyen de surveillance du réacheminement configuré de telle sorte
b1) qu'il tient un compte pour chaque relation de trafic entre la paire noeud de départ/noeud de destination,
b11) en cas d'acheminement fructueux d'un appel via un chemin alternatif proposé en premier, l'état du compte affecté à la relation de trafic de cet appel étant augmenté d'une première valeur,
b12) en cas de réacheminement nécessaire pour un appel, l'état du compte affecté à la relation de trafic de cet appel étant diminué d'une seconde valeur,
b2) qu'il restreint le réacheminement pour une certaine relation de trafic lorsque l'état du compte associé à cette relation de trafic est en dessous d'une valeur seuil définie.

4. Système d'acheminement selon la revendication 3,
**caractérisé en ce que**
le moyen de surveillance du réacheminement restreint le réacheminement en l'interrompant par moments.
